Europäisches Patentamt

European Patent Office

Office européen des brevets

(11) Publication number: **0 068 550**
A1

## (12) EUROPEAN PATENT APPLICATION

(21) Application number: 82200725.8

(22) Date of filing: 11.06.82

(51) Int. Cl.³: **B 65 B 21/20**

(30) Priority: 19.06.81 NL 8102973

(43) Date of publication of application: 05.01.83
Bulletin 83/1

(84) Designated Contracting States: **AT BE CH DE FR GB IT LI LU NL SE**

(71) Applicant: **STORK BEPAK B.V., 2 Groeneweg,
NL-3531 VE Utrecht (NL)**

(72) Inventor: **Mulder, Harry, 14 Koningsspil, NL-8604 ES
Sneek (NL)**

(74) Representative: **Mathol, Heimen et al,
EXTERPATENT 3 & 4 Willem Witsenplein, NL-2596 BK
The Hague (NL)**

(54) Method and apparatus for loading a packing unit with containers, as well as a gripper head for this apparatus.

(57) Containers such as bottles carried through parallel supply tracks (3-5) in a few adjacent rows to a loading station (11) are loaded into a packing unit (1).

A gripper head (12) is used with grippers adjustable in relative position between a pick-up pattern and a loading pattern. The containers supplied to the loading station are first arranged into an intermediateformation during their approach to the loading station. After being seized by the gripper head, the grippers with the bottles are spreaded in a direction perpendicular to the supply direction (A) and/or in the supply direction (A) so as to arrive into the loading pattern. Hereafter the gripper head loweres the containers into the packing unit.

0068550

Method and apparatus for loading a packing unit with
containers, as well as a gripper head for this apparatus.

The invention relates to a method for loading a packing
unit with containers which are being carried through
parallel supply tracks in a few rows disposed side by side,
to a loading station, using a gripper head having grippers
which can be adjusted in relative positions, and which in
a first position pick up the containers in a fixed pattern
and which during the time interval lapsed between the picking
up and the delivering of the containers, move the grippers
with these containers towards another position into a
pattern differing from the pick-up pattern.

Such a method is known to exist in several different embodiments, vide FR-A-2 233 231 using heads called expanding/
closing heads. In such case, both the pick-up pattern and the
loading pattern are formed by mutually identical rows of
containers (usually bottles) which are only displaced in a
transverse direction, viz. perpendicular to the supply
direction. When using larger containers such as for example bottles having a capacity of one or one and a half liter, it is desirable to use a packing unit (for instance a crate) wherein the adjoining rows of containers are staggered relative to one another in both longitudinal and transverse direction and so usually contain an unequal number of containers per row.

The object of the invention is to provide a method which affords carrying out this manner of loading of a packing unit in a single operation with a reasonable handling capacity. Said object is attained according to the invention in that in the vicinity of the loading station a first relative displacement perpendicular to the supply direction is brought about between the rows of containers supplied, for the purpose of forming the pick-up pattern, a second displacement taking place in the supply direction of only a part of the containers picked up by the gripper head during said time interval for the purpose of forming the loading pattern.

Due to these features, the necessary change in position of the containers supplied is split into two mutually perpendicular steps, whereby each step requires only a small change in position. The first step towards changing the lateral spacing as required occurs at the end of the supply track in the loading station, while the second part proceeds during the time interval in which the gripper head carries the containers to the packing unit. It is thus possible to carry out the loading at a high speed without subjecting the containers to accelerating forces tending to produce disturbances.

The invention furthermore relates to an apparatus for carrying out the method described hereinbefore, such as for example a bottle packing machine used in conjunction with a supply of packing units, such as for instance crates, to a loading station, the apparatus principally consisting of a track enabling the containers to travel thereon in a few rows disposed side by side, a bottle rack with guide plates, a stop bar, as well as one or several gripper heads working in parallel and having grippers which can be adjusted in relative positions. According to the invention, such an apparatus is characterized in that, in the longitudinal direction and/or the transverse direction of the supply track of the containers, there is provided in the vicinity of the loading station at least one filler piece for obtaining a relative displacement of at least part of the containers present in the vicinity of the loading station for the purpose of forming the pick-up pattern and in that each gripper head is provided with at least one element which is positively displaceable in the supply direction.

The invention particularly relates to an apparatus provided with three adjoining supply tracks for the containers cooperating with a gripper head. According to the invention, this specific embodiment is characterized in that the central track is provided with a filler piece in the form of an end stop, the gripper head in the area located above said track being provided with two grippers and with means for displacing at least one of said two grippers, in a manner so that the containers which had been picked up in the pick-up pattern, are brought into the loading pattern by said grippers, said containers being disposed in a relation shifted with respect to the containers picked up grom the two adjoining tracks.

The invention is furthermore embodied in a gripper head from the apparatus described hereinbefore which, according to the invention, is provided with an actively displaceable element which cooperates with at least one additional, other passively displaceable element and with a fixed element in the gripper head, each displaceable element being provided with at least one gripper and the fixed element being provided with at least three grippers. It should be noted in this connection that the actively displaceable element is controlled by a pulse which is given from an external point and which is generated for instance at the moment that the gripper head lifts the containers from the supply track. The passively displaceable elements derive their displaceability from the movement of the actively displaceable element.

The characteristic features mentioned in the foregoing as well as particulars of the invention yet to be described in more detail will be further explaine with reference to the drawing which shows two forms of embodiment of the apparatus of the invention.

Fig. 1 is a diagrammatic depiction of the loading station that on the left-hand side consists of the end of the supply track and on the right-hand side consists of the conveyor track whereupon ther is a packing unit.

Fig. 2 is a top view of the gripper head to be used in the apparatus as per Fig. 1, said head being in the pick-up position.

Fig. 3 shows the gripper head as per Fig. 2 in the loading position.

Fig. 4 shows, in a manner similar to Fig. 1, another specific embodiment of the loading station.

The figures 5 and 6 provide a top view of the gripper head to be used therewith in the pick-up position and the loading position, respectively.

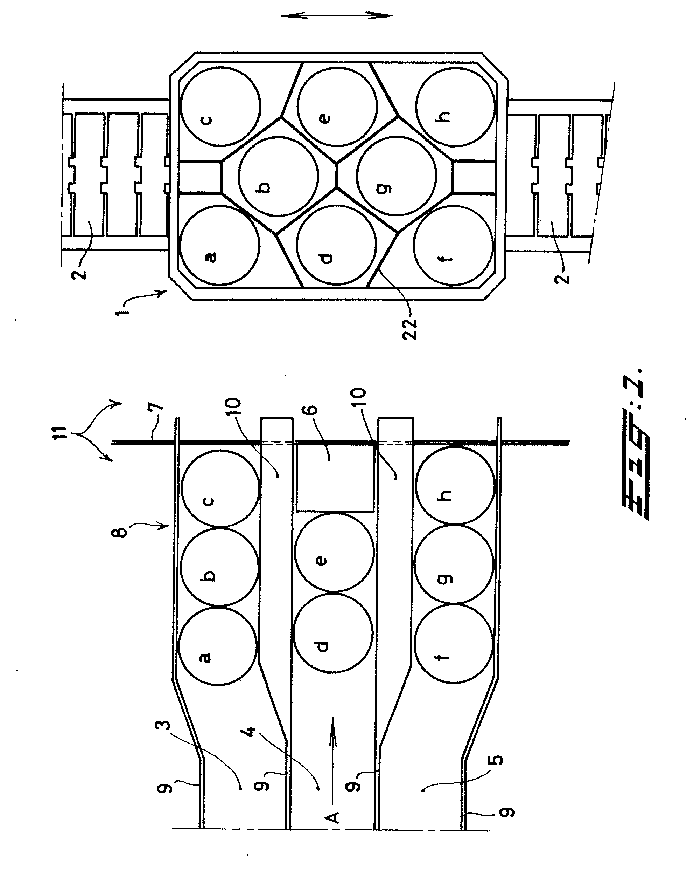

The apparatus shown in Fig. 1 concerns a bottle packing machine, where each time eight bottles $\underline{a}$ - $\underline{h}$ are to be shifted over into a packing unit or crate 1 which is delivered on a conveyor track 2. The bottles $\underline{a}$ - $\underline{h}$ travel on three adjoining supply tracks 3 - 5 in the direction A. In each operation three bottles $\underline{a}$ - $\underline{c}$ and $\underline{f}$ - $\underline{h}$ are supplied on the tracks 3 and 5, while on the central track 4 only the two bottles $\underline{d}$ and $\underline{e}$ get into the group of eight bottles shown in Fig. 1. The latter fact is the result of a filler piece 6 being located before the stop bar 7 against which the first bottles come to rest.

The left-hand part of Fig. 1 forms a bottles rack 8 having

guide plates 9. In addition to the filler piece 6 at the end of the supply track 4 there are provided two filler pieces 10 in the form of an expanded portion of the guide plate 9 in question. These filler pieces 10 ensure that the three bottles a - c as well as f - h are displaced outwards in transverse direction, and as a result will become positioned at some distance from the trwo central bottles d and e. The formation of the bottles a - h as illustrated in the left-hand part of Fig. 1 constitutes the pick-up pattern for the group of eight bottles which are to be loaded into the crate 1 on the right-hand side of Fig. 1. The two parts of Fig. 1 jointly form the loading station 11.

Disposed above the loading station shown in Fig. 1 there is at least one gripper head 12 whose outer circumference is de-fined by a frame 13. Within said frame there is provided a displaceable element 14 designed as a trapezium-shaped block. This block is guided along two rods 15 fastened within the frame 13. The displacement of the element 14 is effected by means of a pneumatic cylinder 16 which is likewise supported on the frame 13. The actively displaceable element 14 cooperates with two displaceable elements 17. Said elements 17 have a beveled face resting against the incline side of the element 14. The two elements 17 are guided by rods 18 fastened within the frame 13. The elements 17 are being kept under pressure produced by two springs 19 in such a manner that, upon displacement of the element 14, the elements 17 move inwards or outwards. Within the frame 13, the gripper head 12 is also provided with a fixed element 20 along the one side, and two fixed angle elements 21 on the other side. The fixed elemtn 20 is provided with three grippers diagrammatically indicated by a cross, the other elements 14, 17 and 21 each carrying one gripper.

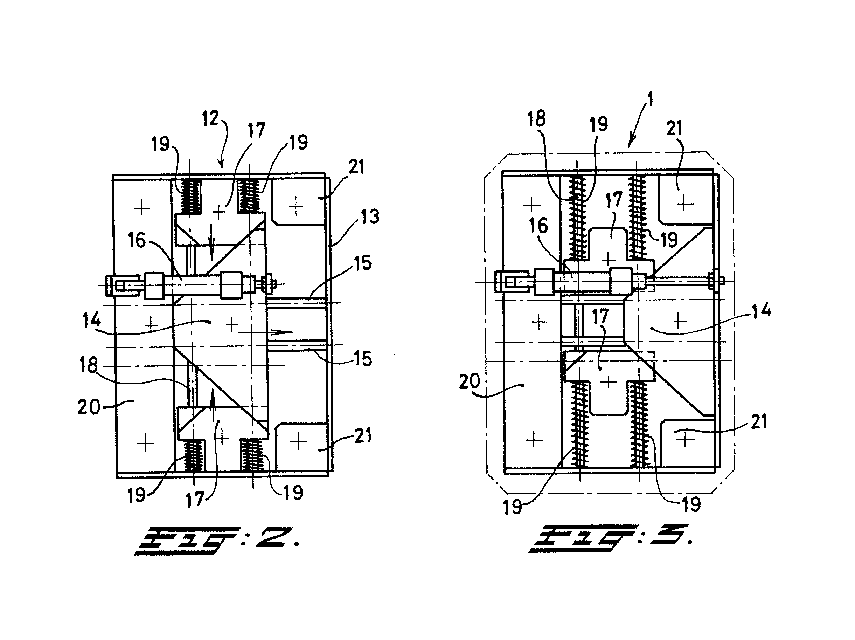

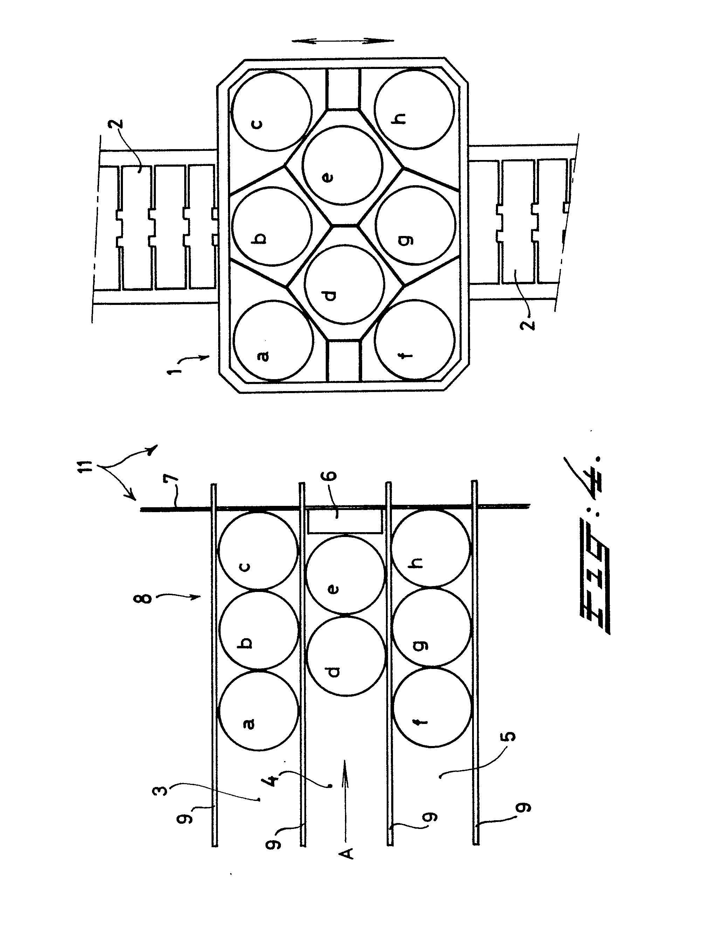

The actively displaceable element 14 of the gripper head 12 can be brought into the position as shown in Fig. 2 or be moved to the position as shown in Fig. 3 by means of a pneumatic cylinder 16. The former position, shown in Fig. 2, is such that the eight grippers of the elements 14, 17, 20 and 21 are in position entirely or substantially corresponding to the formation of the bottles a - h on the left-hand side of Fig. 1. This position is the pick-up position, at which the gripper head is lowered above the bottle rack 8 so as to pick up the eight bottles present therein. Thereupon, the gripper head 12 changes the pick-up pattern of the eight bottles shown on the left-hand side of Fig. 1 into the loading pattern which is shown on the right-hand side of Fig. 1 and which corresponds to the compartmental arrangement 22 in the packing unit (crate) 1. This transformation is brought about by shifting the actively displaceable element 14 from the pick-up position as shown in Fig. 2 to the loading position as shown in Fig. 3.

As soon as the gripper head 12 in the position as shown in Fig. 2 has taken and lifted the eight bottles from the bottle rack 8, the pneumatic cylinder is actuated so that the element 14 moves to the right along the rods 15 and assumes the position as shown in Fig. 3. Under the influence of the pressure springs 19, the elements 17 will move along the rods 18 and assume a more inwardly directed position, as is clearly evident from Fig. 3. The loading position of the gripper head 12 illustrated in the latter figure entirely or substantially corresponds to the loading position shown in the right-hand part of Fig. 1. Consequently, the bottles a - h hanging on said head 12 can be lowered into the packing unit 1, whereupon the grippers can be opened to release the bottles. Subsequently, the gripper head 12 can return to its position above the bottle rack 8. During this return movement the pneumatic cylinder 16 is actuated again so as to move the element 14 back to the position as shown in Fig. 2, while at the same time the passively displaceable elements 17 move against the force of the springs 19 to return to their outer position as also illustrated in Fig. 2.

It will be evident from the foregoing that the bottles supplied on the tracks 3 - 5 are brought, via an intermidiate stage shown in the left-hand part of Fig. 1, into the correct loading pattern as shown in the right-hand part fo Fig. 1. To this end, provisions have been made in the bottle rack 8 which consist of the filler pieces 6 and 10 in such a manner that, as an intermediate stage, there is produced a pick-up pattern that already partially corresponds to the loading pattern. The transformation that remains to be carried out takes place in the gripper head 12, so that only minor displacements are required for the intended loading pattern to be attained. This afford realizing a greater handling capacity without imparting to the accelerating forces a value which is such that the bottles will start swinging too much in the gripper head (will become restless). In the embodiment according to Figs. 1 - 3 discussed thus far, the loading of the packing unit or crate 1 takes place in a situation wherein the longitudinal direction of said crate coincides with the direction of conveyance of the track 2.

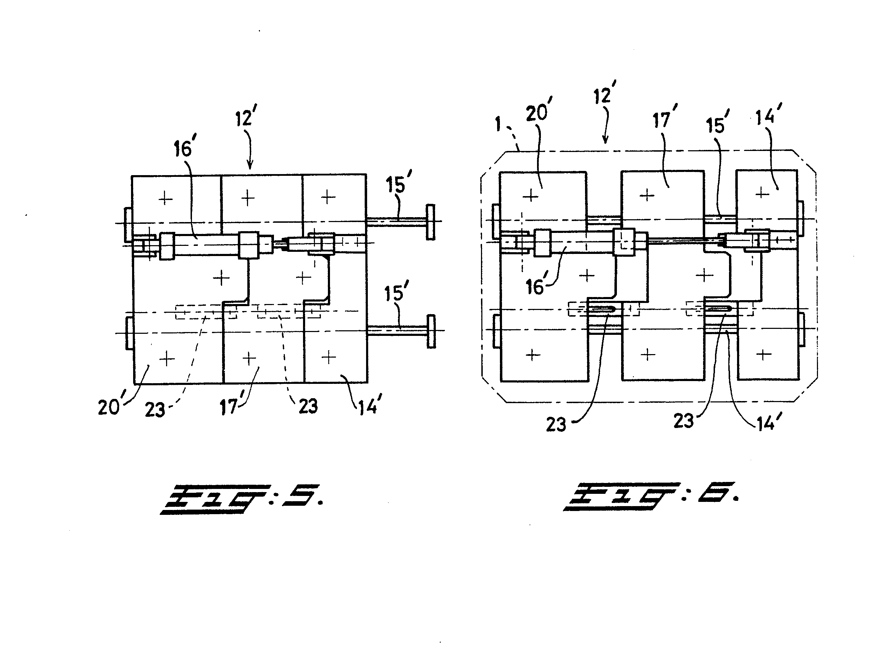

In the embodiment as per Figs. 4 - 6, the loading of each crate 1 proceeds in a situation wherein said crate is placed upon the conveyror track 2 transversely to the direction of travel of said track. Correlated therewith is the fact that the bottle rack 8 shown in the left-hand part of Fig. 4 contains only one filler piece 6 and no filler pieces 10. In this case the gripper head 12' shown in Figs. 5 and 6 is not provided with an encasing frame, but is comprised of a fixed element 20', an actively displaceable element 14', and a passively displaceable element 17'. The element 14' is moved along the rods 15' by the pneumatic cylinder 16'. The elements 14', 17' and 20' are interconnected by way of link members 23 each having a slotted hole and thus enabling a transformation from the closed position illustrated in Fig. 5 (the pick-up position) to the expanded position shown in Fig. 6 (the loading position).

In the figures 5 and 6, a cross indicates the locations under which there are provided the grippers. The respective positions of the grippers assumed in the position of the gripper head as illustrated in Fig. 5 correspond to the pick-up pattern of the eight bottles a - h shown in the left-hand part of Fig. 4. After picking up said bottles, the gripper head 12' will move upwards and subsequently move to the right until reaching its position above the crate 1. During this latter displacement, the pneumatic cylinder 16' is actuated and the gripper head 12' proceeds from the situation shown in Fig. 5 to the position as shown in Fig. 6. The position of the bottles a - h hanging on the grippers will now substantially correspond to the loading pattern shown in the right-hand part of Fig. 4, so that the gripper head 12' can be lowered upon the crate 1. Thereupon, the bottles will easily seek their correct positions within the compartmental arrangement 22.

CLAIMS:

1.    Method for loading a packing unit with containers which are being carried through parallel supply tracks in a few rows disposed side by side, to a loading station, using a gripper head having grippers which can be adjusted in relative positions, and which in a first position pick up the containers in a fixed pattern and which during the time interval lapsed between the picking up and the delivering of the containers move the grippers with these containers towards another position into a pattern differing from the pick-up pattern, c h a r a c t e r i z e d   i n   t h a t in the vicinity of the loading station a first relative displacement perpendicular to the supply direction is brought about between the rows of containers supplied, for the purpose of forming the pick-up pattern, a second displacement taking place in the supply direction of only a part of the containers picked up by the gripper head during said time interval for the purpose of forming the loading pattern.

2.    Apparatus for carrying out the method according to claim 1, such as for example a bottle packing machine used in conjuction with a supply of packing units, such as for instance crates, to a loading station, the apparatus principally consisting of a track enabling the containers to travel thereon in a few rows disposed side by side, a bottle rack with guide plates, a stop bar, as well as one or several gripper heads working in parallel and having grippers which can be adjusted in relative positions, c h a r a c t e r i-

zed in that, in the longitudinal direction and/or the transverse direction of the supply track (2-5) of the containers, there is provided in the vicinity of the loading station (11) at least one filler piece (6, 10) for obtaining a relative displacement of at least part of the containers present in the vicinity of the loading station for the purpose of forming the pick-up pattern and in that each gripper head (12) is provided with at least one element (14, 14') which is positively displaceable in the supply direction (A).

3. Apparatus according to claim 2, provided with three adjoining supply tracks for the containers, c h a r a c t e r- i z e d i n t h a t the central track (4) is provided with a filler piece in the form of an end stop (6), the gripper head (12) in the area located above said track being provided with two grippers and with a means for displacing at least one of said two grippers, in a manner so that the containers which had been picked up in the pick-up pattern, are brought into the loading pattern by said grippers, said containers being disposed in a relation shifted with respect to the containers picked up from the two adjoining tracks (3, 5).

4. Gripper head from the apparatus according to claim 2 or 3, c h a r a c t e r i z e d i n t h a t said gripper head (12) is provided with an actively displaceable element (14) which cooperates with at least one other, additional passively displaceable element (17) and with a fixed element (20) in the gripper head, each displaceable element being provided with at least one gripper and the fixed element being provided with at least three grippers.

5.        Apparatus according to claim 2 or 3 for loading crates standing transversely in a closed line, such as for example patent crates for eight 1.5-liter soft-drink bottles, whose supply track is transverse to the conveyor track leading to the bottle rack, c h a r a c t e r i z e d   i n   t h a t the three bottle conveyor tracks (3-5) provided in the location of the bottle rack (8) are interspaced by using filler pieces (10) so as to be at a distance which practically corresponds to three rows in the crate, the two outer rows comprising three and the central row comprising two bottles, and a filler piece (6) being disposed in the central row against the stop bar (7) in a manner so that the positions of the bottles a, d and f, as well as c and h practically correspond to the positions in the loading pattern of said bottles in the crate (Figs. 1-3).

6.        Apparatus according to claim 5, c h a r a c t e r i z e d   i n   t h a t the grippers for the bottles a, d and f as well as c and h have fixed positions in the gripper head, in that the gripper for bottle e is provided in a block (14) which is displaceable transversely to the longitudinal direction of the gripper head (12) along two guide members (15), by means of one or several force-producing devices (16), with such a stroke that as a result bottle e assumes a position corresponding to that of the loading pattern in the crate, in that the blocks (17) for the grippers for the bottles b and g are moveable under a spring load along two guide members

(19) which are perpendicular to the guide members for the blocks of the gripper for bottle _a_, and in that the blocks (17) for the grippers for the bottles _b_ and _g_ are provided with at least one beveld face which per-block cooperates with one of the wto beveled faces of the block (14) for the gripper for bottle _e_, in a manner so that when bottle _e_ has assumed the position corresponding to that of the loading pattern in the crate the bottles _b_ and _g_ have also taken their positions in the loading pattern.

7.      Apparatus according to claim 2 or 3, for loading crates which follow each other in close contact in longitudinal direction in a closed line, such as for example the patent crates for eight 1.5-liter soft-drink bottles, whose supply track is transverse to the conveyor track leading to the bottle  rack, c h a r a c t e r i z e d   i n   t h a t the bottle conveyor tracks (3-5) provided in the location of the bottle rack (8) are interspaced at a distance which practically corresponds to three rows in the crate, the two outer rows comprising three and the central row comprising two bottles, and a filler piece (6) being disposed in the central row against the stop bar (7), in a manner so that the positions of the bottles _a_, _d_ and _f_, and _b_, _e_ and _g_ as well as _c_ and _h_, respectively, mutually practically correspond to those in the loading pattern of the bottles in the crate (Figs. 4-6).

8.      Apparatus according to claim 7, c h a r a c t e r- i z e d   i n   t h a t, in the gripper head, the blocks  for the grippers of the bottles a, d and f and the bottles e and g as well as the bottles c and h, respectively, are moveable relative to one another in the longitudinal direction of the gripper head along two guide rods (15') by means of one or several force-producing devices (16') whose stroke is such that, as a result, the aforesaid blocks are brought into a relative position in such a manner that thereby the bottles are brought into the crate in the loading pattern thereof.

9.        Apparatus according to claim 8, c h a r a c t e r-i z e d   i n   t h a t one of the blocks (20') for the bottles a, d and f or c and h, respectively, is fixedly disposed in the gripper head (12'), the other blocks (14' and 17') in such case being movable relative to one another and all blocks being interconnected by means of two link members (23), and the displaceable block (14'), which is located furthest from the fixed block (20'), being operated by the force-producing device (16').

FIG. 1.

0068550

FIG:2.

FIG:3.

0068550

Fig. 4

Fig:5.

Fig:6.

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 233 231 (S.G.P.E) *Page 1, line 27 - page 2, line 18; page 3, line 2 - page 4, line 12; page 5, lines 4-30; figures 1,2,5,6* | 1-9 | B 65 B 21/20 |

-----

TECHNICAL FIELDS SEARCHED (Int. Cl. ³)

B 65 B

The present search report has been drawn up for all claims

| Place of search | Date of completion of the search | Examiner |
|---|---|---|
| THE HAGUE | 23-09-1982 | VROMMAN L.E.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82